(19) Europäisches Patentamt
European Patent Office
Office européen des brevets

(11) **EP 4 646 984 A1**

(12) **EUROPEAN PATENT APPLICATION**
published in accordance with Art. 153(4) EPC

(43) Date of publication:
**12.11.2025 Bulletin 2025/46**

(21) Application number: **23914477.7**

(22) Date of filing: **13.12.2023**

(51) International Patent Classification (IPC):
**A47L 9/28** (2006.01)      **B25J 9/16** (2006.01)

(86) International application number:
**PCT/CN2023/138444**

(87) International publication number:
**WO 2024/146343 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.01.2023 CN 202310009468**

(71) Applicant: **Beijing Roborock Innovation
Technology Co., Ltd.
Beijing 102206 (CN)**

(72) Inventor: **NIU, Yansheng
Beijing 102206 (CN)**

(74) Representative: **Haseltine Lake Kempner LLP
Cheapside House
138 Cheapside
London EC2V 6BJ (GB)**

(54) **ROBOT DISPLACEMENT DETECTION METHOD AND APPARATUS, STORAGE MEDIUM, AND
ELECTRONIC DEVICE**

(57) The present disclosure relates to the technical field of artificial intelligence, and provides a robot displacement detection method, a robot displacement detection apparatus, a computer storage medium and an electronic device. The robot displacement detection method comprises: during the moving process of a robot, acquiring a tilt angle variation of the robot; according to a displacement increment of two drive wheels and the distance between the two drive wheels, determining a tilt angle variation range of the robot not affected by an external force; and, when the tilt angle variation is beyond the tilt angle variation range, determining that the robot is forcibly displaced.

Acquire an inclination angle change amount of a robot during movement of the robot — S110

Determine an inclination angle change range of the robot when the robot is not affected by an external force according to displacement increments of two driving wheels and a distance between the two driving wheels — S120

Determine that the robot is forcibly displaced when the inclination angle change amount is out of the inclination angle change range — S130

FIG. 1

Description

CROSS-REFERENCE TO RELATED APPLICATION

The present disclosure claims priority to Chinese Patent Application No. 202310009468.6, filed on January 3, 2023, which is incorporated herein by reference in its entirety.

TECHNICAL FIELD

The present disclosure relates to the field of artificial intelligence technologies, and in particular, to a method for robot displacement detection, an apparatus for robot displacement detection, a computer storage medium, and an electronic device.

BACKGROUND

With the rapid development and progress of computers and Internet technologies, the research field of related robots is booming.
At present, during movement of the robot, the non-autonomous displacement event of the robot (for example, a movement from the current position to another position by the user) cannot be effectively detected.
In view of this, there is an urgent need in the art to develop a new method and a new apparatus for robot displacement detection.
It should be noted that the information disclosed in the above background section is only used to enhance the understanding of the background of the present disclosure.

SUMMARY

An objective of the present disclosure is to provide a method for robot displacement detection, an apparatus for robot displacement detection, a computer storage medium, and an electronic device.
Other features and advantages of the present disclosure will become apparent from the following detailed description, or may be learned in part through the practice of the present disclosure.
According to a first aspect of the present disclosure, a method for robot displacement detection is provided, and a robot at least includes two driving wheels, and the method includes: acquiring an inclination angle change amount of the robot during movement of the robot; determining an inclination angle change range of the robot when the robot is not affected by an external force according to displacement increments of the two driving wheels and a distance between the two driving wheels; and determining that the robot is forcibly displaced when the inclination angle change amount is out of the inclination angle change range.
In an exemplary embodiment of the present disclosure, the two driving wheels include a first driving wheel and a second driving wheel, and the method further includes: when the first driving wheel or the second driving wheel rotates in a first direction, a displacement increment of the first driving wheel or the second driving wheel is a positive value; and when the first driving wheel or the second driving wheel rotates in a second direction, a displacement increment of the first driving wheel or the second driving wheel is a negative value, where the second direction is an opposite direction of the first direction.
In an exemplary embodiment of the present disclosure, the method further includes: when the first driving wheel rotates in the first direction and/or the second driving wheel rotates in the second direction, an inclination angle of the robot gradually decreases in a preset hour hand direction; and when the first driving wheel rotates in the second direction and/or the second driving wheel rotates in the first direction, an inclination angle of the robot gradually increases in a preset hour hand direction.
In an exemplary embodiment of the present disclosure, the inclination angle change range is limited by a minimum inclination angle change amount of the robot in the preset hour hand direction and a maximum inclination angle change amount of the robot in the preset hour hand direction.
In an exemplary embodiment of the present disclosure, determining the inclination angle change range of the robot when the robot is not affected by the external force according to the displacement increments of the two driving wheels and the distance between the two driving wheels includes: determining the minimum inclination angle change amount of the robot in the preset hour hand direction according to a maximum association value of the displacement increment of the first driving wheel, a minimum association value of the displacement increment of the second driving wheel, and the distance between the two driving wheels; and determining the maximum inclination angle change amount of the robot in the preset hour hand direction according to a minimum association value of the displacement increment of the first driving wheel, a maximum association value of the displacement increment of the second driving wheel, and the distance between the two driving wheels.
In an exemplary embodiment of the present disclosure, the maximum association value of the displacement increment of the first driving wheel is determined in the following manner: determining a preset value as the maximum association value if the displacement increment of the first driving wheel is a negative value; and determining the displacement increment of the first driving wheel as the maximum association value if the displacement increment of the first driving wheel is a positive value.
In an exemplary embodiment of the present disclosure, the minimum association value of the displacement increment of the second driving wheel is determined in the following manner: determining the displacement increment of the second driving wheel as the minimum association value if the displacement increment of the second driving wheel is a negative value; and determining a preset value as the minimum association value if the displacement increment of the second driving wheel is a positive value.

In an exemplary embodiment of the present disclosure, determining the minimum inclination angle change amount of the robot in the preset hour hand direction according to the maximum association value of the displacement increment of the first driving wheel, the minimum association value of the displacement increment of the second driving wheel, and the distance between the two driving wheels includes: acquiring a difference between the minimum association value of the displacement increment of the second driving wheel and the maximum association value of the displacement increment of the first driving wheel; and determining the minimum inclination angle change amount of the robot in the preset hour hand direction according to a ratio of the difference to the distance between the two driving wheels.

In an exemplary embodiment of the present disclosure, the minimum association value of the displacement increment of the first driving wheel is determined in the following manner: determining the displacement increment of the first driving wheel as the minimum association value if the displacement increment of the first driving wheel is a negative value; and determining a preset value as the minimum association value if the displacement increment of the first driving wheel is a positive value.

In an exemplary embodiment of the present disclosure, the maximum association value of the displacement increment of the second driving wheel is determined in the following manner: determining a preset value as the maximum association value if the displacement increment of the second driving wheel is a negative value; and determining the displacement increment of the second driving wheel as the maximum association value if the displacement increment of the second driving wheel is a positive value.

In an exemplary embodiment of the present disclosure, determining the maximum inclination angle change amount of the robot in the preset hour hand direction according to the minimum association value of the displacement increment of the first driving wheel, the maximum association value of the displacement increment of the second driving wheel, and the distance between the two driving wheels includes: acquiring a difference between the maximum association value of the displacement increment of the second driving wheel and the minimum association value of the displacement increment of the first driving wheel; and determining the maximum inclination angle change amount of the robot in the preset hour hand direction according to a ratio of the difference to the distance between the two driving wheels.

In an exemplary embodiment of the present disclosure, the preset value is 0.

In an exemplary embodiment of the present disclosure, after determining that the robot is forcibly displaced, the method further includes: controlling the robot to suspend a work task being performed; and in response to no forcible displacement of the robot being detected again within a preset duration, controlling the robot to relocate to update position information of the robot.

In an exemplary embodiment of the present disclosure, after controlling the robot to relocate to update the position information of the robot, the method further includes: controlling the robot to continue to perform the work task based on the updated position information.

In an exemplary embodiment of the present disclosure, acquiring the inclination angle change amount of the robot includes: acquiring the inclination angle change amount of the robot in a combination of one or more of the following manners: acquiring the inclination angle change amount of the robot through an angle sensor disposed on the robot; acquiring the inclination angle change amount of the robot through laser direct structuring (LDS); and acquiring the inclination angle change amount of the robot through a movement monitoring image of the robot.

According to a second aspect of the present disclosure, an apparatus for robot displacement detection is provided, and a robot at least includes two driving wheels, and the apparatus includes: an inclination angle change amount acquisition module, configured to acquire an inclination angle change amount of the robot during movement of the robot; an inclination angle change range determination module, configured to determine an inclination angle change range of the robot when the robot is not affected by an external force according to displacement increments of the two driving wheels and a distance between the two driving wheels; and a displacement detection module, configured to determine that the robot is forcibly displaced when the inclination angle change amount is out of the inclination angle change range.

According to a third aspect of the present disclosure, a computer storage medium having a computer program stored thereon is provided, where the computer program, when executed by a processor, implements the method for robot displacement detection according to the above first aspect.

According to a fourth aspect of the present disclosure, an electronic device is provided. The electronic device includes: a processor; and a memory, configured to store executable instructions of the processor, where the processor is configured to execute the executable instructions to perform the method for robot displacement detection according to the above first aspect.

It can be learned from the above technical solutions that the method for robot displacement detection, the apparatus for robot displacement detection, the computer storage medium, and the electronic device in the exemplary embodiments of the present disclosure at least have the following advantages and positive effects:

In the technical solutions according to some embodiments of the present disclosure, in the present disclosure, the inclination angle change amount of the robot is acquired during movement of the robot, the inclination angle change range of the robot when the robot is not affected by the external force is determined according to the displacement increments of the two driving wheels and the distance between the two driving wheels, and it is determined that the robot is forcibly displaced when the inclination angle change amount is out of the inclination angle change range. On the one hand, an effective detection solution for a forced displacement event of the robot is provided, so as to facilitate subsequent formulation of a relevant coping strategy for an adverse effect generated by the forced displacement event, thereby improving the operation stability of the robot. Further, a size of parameters required to be collected in the present disclosure is small, such that the computational load in the detection process is small, the efficiency is high, and the data processing requirement in the robot field is met. On the other hand, the parameters involved in the present disclosure are all conventional parameters reflecting the movement process of the robot, and there is no need to deploy a new detection device, such that accurate forced displacement detection can be achieved without increasing additional costs.

It should be understood that, in the present disclosure, both the foregoing general description and the following detailed description are exemplary and explanatory only and are not construed as limiting the present disclosure.

## BRIEF DESCRIPTION OF THE DRAWINGS

The accompanying drawings, which are incorporated into and constitute a part of the specification, illustrate the embodiments consistent with the present disclosure and are used in conjunction with the specification to explain the principles of the present disclosure. Apparently, the drawings in the following description illustrate merely some embodiments of the present disclosure, and those of ordinary skills in the art may still derive other drawings from these drawings without creative efforts.

FIG. 1 shows a schematic flowchart of a method for robot displacement detection according to an embodiment of the present disclosure;
FIG. 2 shows a schematic flowchart of how to determine, according to displacement increments of two driving wheels and a distance between the two driving wheels, an inclination angle change range of a robot when the robot is not affected by an external force according to an embodiment of the present disclosure;
FIG. 3 shows a schematic flowchart of how to determine a maximum association value of a displacement increment of a first driving wheel described above according to an embodiment of the present disclosure;
FIG. 4 shows a schematic flowchart of how to determine a minimum association value of a displacement increment of a second driving wheel according to an embodiment of the present disclosure;
FIG. 5 shows a schematic flowchart of how to determine a minimum association value of a displacement increment of a first driving wheel according to an embodiment of the present disclosure;
FIG. 6 shows a schematic flowchart of how to determine a maximum association value of a displacement increment of a second driving wheel according to an embodiment of the present disclosure;
FIG. 7 shows an overall flowchart of a method for robot displacement detection according to an embodiment of the present disclosure;
FIG. 8 shows a schematic structural diagram of an apparatus for robot displacement detection according to an exemplary embodiment of the present disclosure; and
FIG. 9 shows a schematic structural diagram of an electronic device according to an exemplary embodiment of the present disclosure.

## DETAILED DESCRIPTION

Exemplary embodiments will now be described more comprehensively with reference to the drawings. However, the exemplary embodiments can be implemented in various forms, and should not be understood as being limited to the examples described herein. On the contrary, these embodiments are provided to make the present disclosure more comprehensive and complete, and comprehensively convey the idea of the exemplary embodiments to those skilled in the art. The described features, structures, or characteristics may be combined in one or more embodiments in any suitable manner. In the following description, many specific details are provided to give a full understanding of the embodiments of the present disclosure. However, those skilled in the art will appreciate that the technical solutions of the present disclosure may be practiced without one or more of the specific details, or other methods, components, apparatuses, steps, etc. may be employed. In other cases, well-known technical solutions are not shown or described in detail to avoid distracting from or obscuring aspects of the present disclosure.

In this specification, the terms "a", "an", "the" and "said" are used to indicate the presence of one or more elements/components/etc.; the terms "include" and "have" are used to indicate open-ended inclusion and mean that there may be additional elements/components/etc. in addition to the listed elements/components/etc.;

the terms "first" and "second" are used only as labels, and are not intended to limit the number of objects thereof.

In addition, the drawings are only schematic illustrations of the present disclosure and are not necessarily drawn to scale. The same reference numerals in the drawings indicate the same or similar parts, and thus repeated description thereof will be omitted. Some of the block diagrams shown in the drawings are functional entities and do not necessarily correspond to physically or logically independent entities.

At present, during movement of a robot, if a displacement situation (for example, a movement from a current position to another position by a user) that is not caused by a movement of the robot occurs, since this displacement situation is not an autonomous movement of the robot, and is short in time and fast, it will interfere with the positioning of the robot, thereby causing a deviation of the robot's own position cognition and affecting the normal operation of the robot.

In the embodiments of the present disclosure, a method for robot displacement detection is first provided, which overcomes, at least to a certain extent, the defect that a forced displacement event for the robot cannot be effectively detected in the related art.

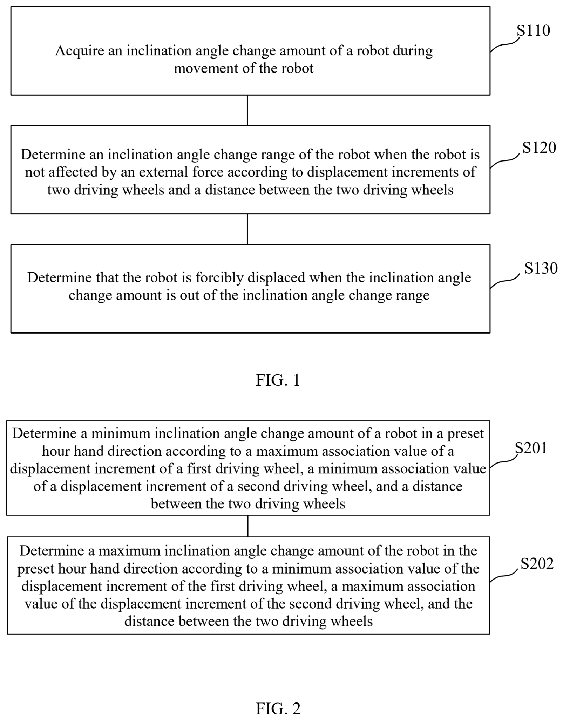

FIG. 1 shows a schematic flowchart of a method for robot displacement detection according to an embodiment of the present disclosure. The method for robot displacement detection may be performed by a control system built into a robot.

Referring to FIG. 1, the method for robot displacement detection according to an embodiment of the present disclosure includes the following steps.

In step S110, an inclination angle change amount of the robot is acquired during movement of the robot.

In step S120, an inclination angle change range of the robot when the robot is not affected by an external force is determined according to displacement increments of the two driving wheels and a distance between the two driving wheels.

In step S130, it is determined that the robot is forcibly displaced when the inclination angle change amount is out of the inclination angle change range.

In the technical solution according to the embodiments shown in FIG. 1, in the present disclosure, the inclination angle change amount of the robot is acquired during movement of the robot, the inclination angle change range of the robot when the robot is not affected by the external force is determined according to the displacement increments of the two driving wheels and the distance between the two driving wheels, and it is determined that the robot is forcibly displaced when the inclination angle change amount is out of the inclination angle change range. On the one hand, an effective detection solution for a forced displacement event of the robot is provided, so as to facilitate subsequent formulation of a relevant coping strategy for an adverse effect generated by the forced displacement event, thereby improving the operation stability of the robot. Further, a size of parameters required to be collected in the present disclosure is small, such that the computational load in the detection process is small, the efficiency is high, and the data processing requirement in the robot field is met. On the other hand, the parameters involved in the present disclosure are all conventional parameters reflecting the movement process of the robot, and there is no need to deploy a new detection device, such that accurate forced displacement detection can be achieved without increasing additional costs.

The following describes in detail a specific implementation process of each step in FIG. 1.

A robot is an automated machine that has some intelligent capabilities similar to those of a human or an organism, such as a perception capability, a planning capability, an action capability, and a collaboration capability, and is an automated machine with high flexibility. A shape of the robot may be set according to an actual requirement, and the robot is not necessarily like a human. As long as a robot can autonomously complete a task and a command given by a human, the robot is a member of a large family of robots. It should be noted that the robot in the present disclosure refers to a robot that serves humans in public places such as homes and hospitals and is mainly engaged in cleaning, washing, sweeping, and other jobs.

The forced displacement event in the present disclosure refers to a displacement that is not caused by a movement of a robot, for example, a displacement that is caused by a manual movement from a current position to another position by a user, a push by the user, or a kick by the user.

In step S110, the inclination angle change amount of the robot is acquired during movement of the robot.

In this step, the inclination angle of the robot may change when the robot moves from the current position to another position. An inclination angle change may be represented by a change amount of an angle between the robot or a component of the robot and a vertical reference plane before and after the movement.

In an optional embodiment, the above robot may be provided with an angle sensor, such that the inclination angle change amount of the above robot may be acquired by the angle sensor.

The angle sensor may be a gyroscope. The gyroscope is an apparatus configured to perform sensing and maintain a direction, and is designed based on the theory of conservation of angular momentum. A physical quantity measured by the gyroscope is a rotational angular velocity during deflection and inclination. The gyroscope mainly consists of a rotatable wheel located on an axis.

In another optional embodiment, the inclination angle change amount of the above robot may be acquired through LDS.

The above LDS may be a millimeter-wave radar. Exemplarily, the millimeter-wave radar may send a millimeter wave to the above robot in real time, and the millimeter wave may be reflected after encountering the robot. The reflected millimeter wave is received by receiving antennas arranged in parallel with the millimeter-wave radar, and an inclination of the robot at each position may be calculated, such that the above inclination angle change amount may be determined according to an inclination angle difference between the current position and another position.

In still another optional embodiment, a movement monitoring image of the above robot may be captured in real time, thereby acquiring the inclination angle change amount of the above robot through the movement monitoring image.

Exemplarily, the above movement monitoring image may include a plurality of image frames, such that two adjacent image frames may be compared to detect whether a feature point reflecting the inclination angle change amount in the image is laterally shifted, and if the feature point is laterally shifted, a shift angle is determined as the inclination angle change amount of the robot.

In yet another optional embodiment, in order to improve the accuracy of the acquired inclination angle change amount described above, the inclination angle change amount of the robot may be acquired using a combination of any two or more of the foregoing manners. Exemplarily, an inclination angle change amount measured by the gyroscope and an inclination angle change amount acquired by the LDS may be weighted (respective weights may be set by themselves, which is not particularly limited in the present disclosure) to obtain the inclination angle change amount of the robot.

In step S120, the inclination angle change range of the robot when the robot is not affected by the external force is determined according to the displacement increments of the two driving wheels and the distance between the two driving wheels.

In this step, it should be noted that if the slippage of the driving wheel is not considered, a theoretical inclination angle change range during the movement of the robot is a fixed value. However, in the present disclosure, in view of the fact that the position of the robot changes continuously under driving wheel slippage, abrupt shifts caused by forced displacement do not occur, thereby preventing the robot from misjudging its own position. Therefore, the slippage generally does not affect the normal operation of the robot. Therefore, in the present disclosure, the inclination angle change under driving wheel slippage is also considered when the inclination angle change range when the robot is not affected by the external force is determined.

Specifically, the robot in the present disclosure at least includes two driving wheels, i.e., a first driving wheel and a second driving wheel. Exemplarily, in the case that the robot includes only two driving wheels, the first driving wheel may be a left wheel, and the second driving wheel may be a right wheel. In the case that the robot includes more than two driving wheels, the first driving wheel may be any wheel mounted on the left side, and the second driving wheel may be a wheel mounted on the right side and closest to the above first driving wheel, which may be set according to the actual situation, and is not particularly limited in the present disclosure. In the following embodiments, a case where the above robot includes two driving wheels (a left wheel and a right wheel) is taken as an example for description.

An odometer A may be disposed on the left wheel of the above robot, and an odometer B may be disposed on the right wheel of the robot. Therefore, when the robot moves from the current position to another position, displacement increments of the two driving wheels may be respectively acquired by the odometers disposed on the two driving wheels, and further, the inclination angle change range of the robot when the robot is not affected by the external force may be determined according to displacement increments of the two driving wheels and a distance between the two driving wheels.

Exemplarily, a rotation direction of the driving wheel may include a first direction and a second direction. The first direction may be a forward direction, and the second direction may be a backward direction. When any one of the driving wheels rotates in the forward direction (i.e., rotates forward), the body of the robot on a side corresponding to the driving wheel may tend to move forward; and when any one of the driving wheels rotates in the backward direction (i.e., rotates backward), the body of the robot on a side corresponding to the driving wheel may tend to move backward.

In the present disclosure, a direction of the odometer may be defined as: forward is positive, and reverse is negative. Therefore, when the left wheel or the right wheel rotates forward, a displacement increment of the left wheel or the right wheel is a positive value. When the left wheel or the right wheel moves backward, a displacement increment of the left wheel or the right wheel is a negative value.

A relationship between a moving direction of the driving wheel and an inclination angle change trend of the robot is described below:

When the right wheel does not move and the left wheel rotates forward, the inclination angle of the robot increases in the clockwise direction, such that the inclination angle of the robot decreases in the counterclockwise direction.

When the left wheel does not move and the right wheel rotates backward, the inclination angle of the robot increases in the clockwise direction, such that the inclination angle of the robot decreases in the counterclockwise direction.

When the left wheel rotates forward and the right wheel rotates backward, the inclination angle of the robot increases in the clockwise direction, such that the inclination angle of the robot decreases in the counterclockwise direction.

When the right wheel does not move and the left wheel rotates backward, the inclination angle of the robot increases in the counterclockwise direction.

When the left wheel does not move and the right wheel rotates forward, the inclination angle of the robot increases in the counterclockwise direction.

When the left wheel rotates backward and the right wheel rotates forward, the inclination angle of the robot increases in the counterclockwise direction.

When the displacement increment of the left wheel is larger and the displacement increment of the right wheel is smaller, the inclination angle change amount of the robot in the counterclockwise direction is the smallest. When the displacement increment of the left wheel is smaller and the displacement increment of the right wheel is larger, the inclination angle change amount of the robot in the counterclockwise direction is the largest.

Therefore, in the present disclosure, the counterclockwise direction may be used as a preset hour hand direction, such that the above inclination angle change range may be limited by a minimum inclination angle change amount of the robot in the counterclockwise direction and a maximum inclination angle change amount of the robot in the counterclockwise direction.

Optionally, the clockwise direction may also be used as the above preset hour hand direction, such that the above inclination angle change range may be limited by a minimum inclination angle change amount of the robot in the clockwise direction (equivalent to the maximum inclination angle change amount of the above robot in the counterclockwise direction) and a maximum inclination angle change amount of the robot in the clockwise direction (equivalent to the minimum inclination angle change amount of the above robot in the counterclockwise direction).

In the following embodiments, an example in which the inclination angle change range is limited by the minimum inclination angle change amount of the robot in the counterclockwise direction and the maximum inclination angle change amount of the robot in the counterclockwise direction is used for description.

Referring to FIG. 2, FIG. 2 shows a schematic flowchart of how to determine, according to displacement increments of two driving wheels and a distance between the two driving wheels, an inclination angle change range of a robot when the robot is not affected by an external force according to an embodiment of the present disclosure, including steps S201 to S202.

In step S201, a minimum inclination angle change amount of the robot in a preset hour hand direction is determined according to a maximum association value of a displacement increment of a first driving wheel, a minimum association value of a displacement increment of a second driving wheel, and a distance between the two driving wheels.

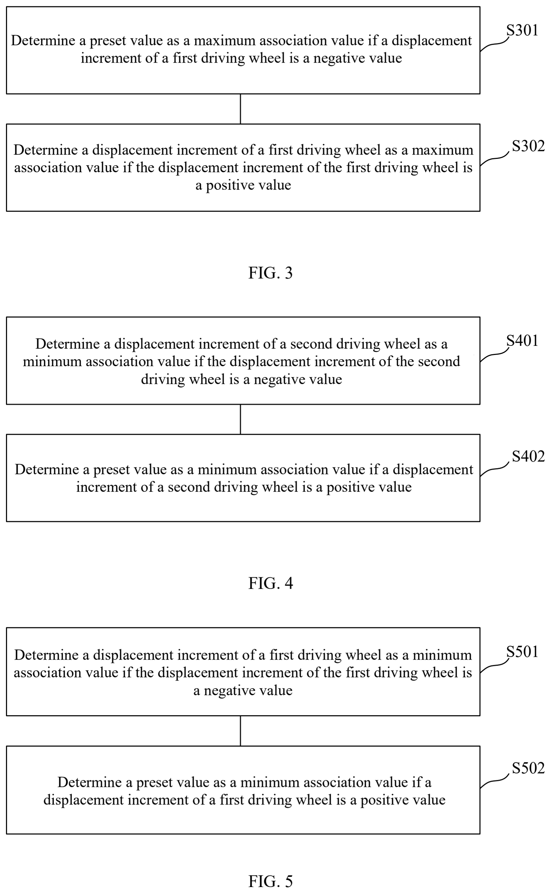

In this step, referring to FIG. 3, FIG. 3 shows a schematic flowchart of how to determine the maximum association value of the displacement increment of the first driving wheel described above according to an embodiment of the present disclosure, including steps S301 to S302.

In step S301, if the displacement increment of the first driving wheel is a negative value, a preset value is determined as the maximum association value.

In this step, it may be determined whether the displacement increment L of the first driving wheel (i.e., a left wheel) is a negative value. If the displacement increment L of the first driving wheel described above is a negative value, the preset value (i.e., 0) may be determined as the maximum association value $L_{max}$ of the displacement increment of the first driving wheel.

In step S302, if the displacement increment of the first driving wheel is a positive value, the displacement increment of the first driving wheel is determined as the maximum association value.

In this step, if the displacement increment L of the first driving wheel described above is a positive value, L may be determined as the maximum association value $L_{max}$ of the displacement increment of the first driving wheel.

Referring to FIG. 4, FIG. 4 shows a schematic flowchart of how to determine a minimum association value of a displacement increment of a second driving wheel according to an embodiment of the present disclosure, including steps S401 to S402.

In step S401, if the displacement increment of the second driving wheel is a negative value, the displacement increment of the second driving wheel is determined as the minimum association value.

In this step, it may be determined whether the displacement increment R of the second driving wheel (i.e., a right wheel) is a negative value. If the displacement increment R of the second driving wheel described above is a negative value, R may be determined as the minimum association value $R_{min}$ of the displacement increment of the second driving wheel.

In step S402, if the displacement increment of the second driving wheel is a positive value, a preset value is determined as the minimum association value.

In this step, if the displacement increment R of the second driving wheel described above is a positive value, the preset value (i.e., 0) may be determined as the minimum association value $R_{min}$ of the displacement increment of the second driving wheel.

After determining the maximum association value $L_{max}$ of the displacement increment of the first driving wheel and the minimum association value $R_{min}$ of the displacement increment of the second driving wheel, taking the distance between the two driving wheels as r as an example, the minimum inclination angle change amount $\theta_{min}$ of the above robot in the preset hour hand direction may be determined based on the following formula 1:

$$\theta_{min} = \frac{R_{min} - L_{max}}{r} \qquad \text{formula 1}$$

Next, referring to FIG. 2, in step S202, a maximum inclination angle change amount of the robot in the preset hour hand direction is determined according to a minimum association value of the displacement increment of the first driving wheel, a maximum association value of the displacement increment of the second driving wheel, and the distance between the two driving wheels.

In this step, referring to FIG. 5, FIG. 5 shows a schematic flowchart of how to determine a minimum association value of a displacement increment of a first driving wheel according to an embodiment of the present disclosure, including steps S501 to S502.

In step S501, if the displacement increment of the first driving wheel is a negative value, the displacement increment of the first driving wheel is determined as the minimum association value.

In this step, it may be determined whether the displacement increment L of the first driving wheel described above is a negative value. If the displacement increment L of the first driving wheel is a negative value, the displacement increment L of the first driving wheel is determined as the minimum association value $L_{min}$ of the displacement increment of the first driving wheel.

In step S502, if the displacement increment of the first driving wheel is a positive value, a preset value is determined as the minimum association value.

In this step, if the displacement increment of the first driving wheel described above is a positive value, the preset value (i.e., 0) is determined as the minimum association value $L_{min}$ of the displacement increment of the first driving wheel.

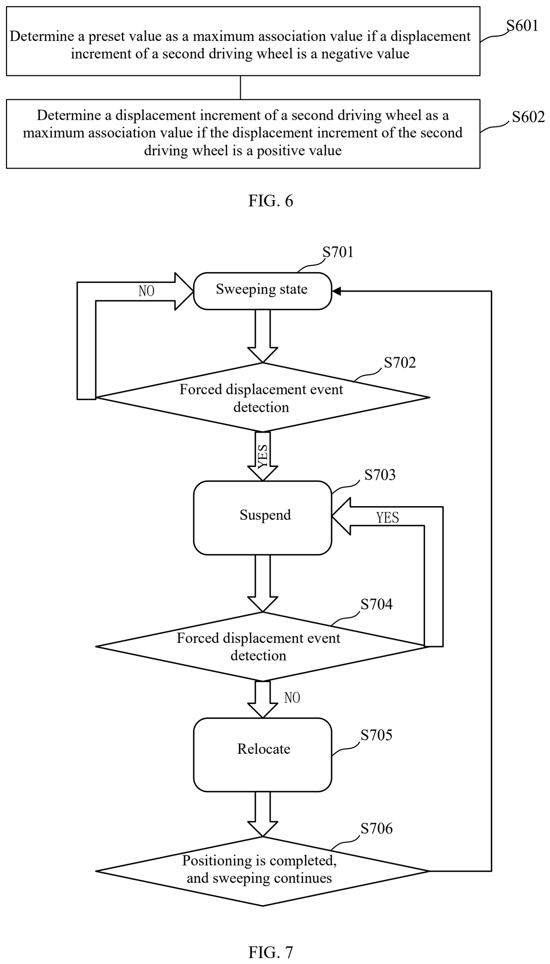

Referring to FIG. 6, FIG. 6 shows a schematic flowchart of how to determine the maximum association value of the displacement increment of the second driving wheel described above according to an embodiment of the present disclosure, including steps S601 to S602.

In step S601, if the displacement increment of the second driving wheel is a negative value, a preset value is determined as the maximum association value.

In this step, it may be determined whether the displacement increment R of the second driving wheel is a negative value. If the displacement increment R of the second driving wheel described above is a negative value, the preset value (i.e., 0) may be determined as the maximum association value $R_{max}$ of the displacement increment of the second driving wheel.

In step S602, if the displacement increment of the second driving wheel is a positive value, the displacement increment of the second driving wheel is determined as the maximum association value.

In this step, if the displacement increment R of the second driving wheel described above is a positive value, R may be determined as the maximum association value $R_{max}$ of the displacement increment of the second driving wheel.

After determining the minimum association value $L_{min}$ of the displacement increment of the first driving wheel and the maximum association value $R_{max}$ of the displacement increment of the second driving wheel, taking the distance between the two driving wheels as r as an example, the maximum inclination angle change amount $\theta_{max}$ of the above robot in the preset hour hand direction may be determined based on the following formula 2:

$$\theta_{max} = \frac{R_{max} - L_{min}}{r} \qquad \text{formula 2}$$

Further, in an optional embodiment, it may be determined that the inclination angle change range of the robot when the robot is not affected by the external force is $(\theta_{min}, \theta_{max})$. In another optional embodiment, an error range w may also be set, such that the inclination angle change range of the above robot when the robot is not affected by the external force may be $(\theta_{min} - w, \theta_{max} + w)$.

The embodiments of how to determine the inclination angle change range of the robot when the robot is not affected by the external force are described below in combination with different situations of the robot in a specific application scenario.

Generally, the robot may move in directions that include: forward, backward, left, and right.

Forward movement refers to a case where the left wheel and/or the right wheel of the robot rotate to the front thereof, and the slight steering that may accompany the forward movement is negligible. In view of the fact that the inclination angle change under driving wheel slippage is also considered in the present disclosure, the following situations can be considered as forward situations: both the left wheel and the right wheel rotate forward, the left wheel slips in place while the right wheel rotates forward, and the left wheel rotates forward while the right wheel slips in place.

Backward movement refers to a case where the left wheel and/or the right wheel of the robot reverses toward the rear thereof, and the slight steering that may accompany the backward movement is negligible. In view of the fact that the inclination angle change under driving wheel slippage is also considered in the present disclosure, the following situations can be considered as backward scenarios: both the left wheel and the right wheel rotate backward, the left wheel slips in place while the right wheel rotates backward, and the left wheel rotates backward while the right wheel slips in place.

Left turn refers to a case where the left wheel of the robot rotates backward and the right wheel rotates forward, and a slight displacement change that may accompany the left turning is negligible. In view of the fact that the inclination angle change under driving wheel slippage is also considered in the present disclosure, the following situations can be considered as left turning scenarios: both the left wheel and the right wheel slip in place, the left wheel slips in place while the right wheel rotates forward, and the left wheel rotates backward while the right wheel rotates forward.

Right turn refers to a case where the left wheel of the robot rotates forward and the right wheel rotates backward, and a slight displacement change that may accompany the right turning is negligible. In view of the fact that the inclination angle change under driving wheel slippage is also considered in the present disclosure, the following situations can be considered as right turning scenarios: both the left wheel and the right wheel slip in place, the left wheel rotates forward while the right wheel slips in place, and the left wheel rotates forward while the right wheel rotates backward.

The embodiments of how to determine, during the forward movement, the inclination angle change range of the robot when the robot is not affected by the external force are first described below.

When the moving direction of the robot is forward, in the case that the left wheel does not slip at all (in this case, the displacement increment of the left wheel is the largest) and the right wheel completely slips in place (the displacement increment of the right wheel is the smallest), the minimum inclination angle change amount $\theta_{min}$ of the robot in the counterclockwise direction in the case that the robot is not affected by the external force can be obtained. In this case, it is assumed that the odometer A detects that the displacement increment of the left wheel is L. With reference to the definitions of the forward movement and the odometer direction, it can be learned that L is a positive value, the maximum association value $L_{max}$ of L takes L, and the minimum association value $R_{min}$ of the displacement increment of the right wheel is 0. Therefore, $\theta_{min} = -\frac{L}{r}$ can be determined based on the above formula 1.

When the moving direction of the robot is forward, in the case that the left wheel completely slips (the displacement increment of the left wheel is the smallest) and the right wheel does not slip at all (the displacement increment of the right wheel is the largest), the maximum inclination angle change amount $\theta_{max}$ of the robot in the counterclockwise direction in the case that the robot is not affected by the external force can be obtained. In this case, it is assumed that the odometer B detects that the displacement increment of the right wheel is R. With reference to the definitions of the forward movement and the odometer direction, it can be learned that R is a positive value, the maximum association value $R_{max}$ of R takes R, and the minimum value $L_{min}$ of the displacement increment of the left wheel is 0. Therefore, $\theta_{max} = \frac{R}{r}$ can be determined based on the above formula 2.

Therefore, in an optional embodiment, in the case of forward movement, the inclination angle change range of the robot when the robot is not affected by the external force may be represented as $\left(-\frac{L}{r}, \frac{R}{r}\right)$. In another optional embodiment, an error range w may also be set, such that in the case of forward movement, the inclination angle change range of the above robot when the robot is not affected by the external force may be $\left(-\frac{L}{r} - w, \frac{R}{r} + w\right)$.

The embodiments of how to determine, during the backward movement, the inclination angle change range of the robot when the robot is not affected by the external force are then described below.

When the moving direction of the robot is backward, since the driving wheel rotates backward during the backward movement, the displacement increment is a negative value. Therefore, when the left wheel completely slips, the displacement increment of the left wheel is the largest, and when the right wheel does not slip at all, the displacement increment of the right wheel is the smallest. Therefore, in the case that the left wheel completely slips in place and the right wheel does not slip at all, the minimum inclination angle change amount $\theta_{min}$ of the robot in the counterclockwise direction in the case that the robot is not affected by the external force can be obtained. In this case, it is assumed that the odometer B detects that the displacement increment of the right wheel is R. With reference to the definitions of the backward movement and the odometer direction, it can be learned that R is a negative value, the minimum association value $R_{min}$ of R takes R, and the maximum association value $L_{max}$ of the displacement increment of the left wheel is 0. Therefore, $\theta_{min} = \frac{R}{r}$ can be determined based on the above formula 1.

When the moving direction of the robot is backward, in the case that the left wheel does not slip at all (the displacement increment of the left wheel is the smallest) and the right wheel completely slips (that is, the right wheel does not move at all, and the displacement increment of the right wheel detected by the odometer B is 0), the maximum inclination angle change amount $\theta_{max}$ of the robot in the counterclockwise direction when the robot is not affected by the external force can be obtained. In this case, it is assumed that the odometer A detects that the displacement increment of the left wheel is L. With reference to the definitions of the backward movement and the odometer direction, it can be learned that L is a negative value, the value of the minimum association value $L_{min}$ of L is L, and the maximum association value $R_{max}$ of the displacement increment of the right wheel is 0. Therefore, $\theta_{max} = \frac{-L}{r}$ can be determined based on the above formula 2.

Therefore, in an optional embodiment, in the case of backward movement, the inclination angle change range when the robot is not affected by the external force may be represented as $\left(\frac{R}{r}, -\frac{L}{r}\right)$. In another optional embodiment, an error range w may also be set, such that in the case of backward movement, the inclination angle change range of the above robot when the robot is not affected by the external force may be represented as $(\frac{R}{r} - w, -\frac{L}{r} + w)$.

The embodiments of how to determine, during the left turn, the inclination angle change range of the robot when the robot is not affected by the external force are then described below.

When the moving direction of the robot is left, since the left wheel needs to rotate backward and the right wheel needs to rotate forward during the left turn, in this case, the displacement increment of the left wheel is a negative value. Therefore, when the left wheel completely slips, the displacement increment of the left wheel is the largest, and when the right wheel completely slips, the displacement increment of the right wheel is the smallest. Therefore, in the case that both the left wheel and the right wheel completely slip, the minimum inclination angle change amount $\theta_{min}$ of the robot in the counterclockwise direction in the case that the robot is not affected by the external force can be obtained. In this case, the maximum association value $L_{max}$ of the displacement increment L of the left wheel is 0, and the minimum association value $R_{min}$ of the displacement increment of the right wheel is also 0. Therefore, $\theta_{min}$ = 0 can be determined based on the above formula 1.

When the moving direction of the robot is left, in the case that the left wheel does not slip at all (the displacement increment of the left wheel is the smallest) and the right wheel does not slip at all (the displacement increment of the right wheel is the largest), the maximum inclination angle change amount $\theta_{max}$ of the robot when the robot is not affected by the external force can be obtained. Therefore, it is assumed that the odometer A detects that the displacement increment of the left wheel is L, and the odometer B detects that the displacement increment of the right wheel is R. According to the definitions of the left turn and the odometer, it can be learned that L is a negative value and R is a positive value, such that the minimum association value $L_{min}$ of L is L, and the maximum association value $R_{max}$ of R is R. Therefore, the inclination angle change amount $\theta_{max} = \frac{R-L}{r}$ of the robot can be determined based on the above formula 2.

Therefore, in an optional embodiment, in the case of the left turn, the inclination angle change range when the robot is not affected by the external force may be represented as $(0, \frac{R-L}{r})$. In another optional embodiment, an error range w may also be set, such that in the case of the left turn, the inclination angle change range when the above robot is not affected by the external force may be represented as $(-w, \frac{R-L}{r} + w)$.

The embodiments of how to determine, during the right turn, the inclination angle change range of the robot when the robot is not affected by the external force are finally described below.

When the moving direction of the robot is right, since the right wheel needs to rotate backward and the left wheel needs to rotate forward, the displacement increment of the right wheel is a negative value and the displacement increment of the left wheel is a positive value. It can be learned that when the left wheel does not slip at all, the displacement increment of the left wheel is the largest, and when the right wheel does not slip at all, the displacement increment of the right wheel is the smallest. Therefore, when the left wheel does not slip at all and the right wheel does not slip at all, the minimum inclination angle change amount $\theta_{min}$ of the robot in the counterclockwise direction when the robot is not affected by the external force can be obtained. Therefore, it is assumed that the odometer A detects that the displacement increment of the left wheel is L, and the odometer B detects that the displacement increment of the right wheel is R. According to the definitions of the right turn and the odometer, it can be learned that L is a positive value, the maximum association value $L_{max}$ of L is L, R is a negative value, and the minimum association value $R_{min}$ of R is R. Therefore, $\theta_{min} = \frac{R-L}{r}$ can be determined based on the above formula 1.

When the moving direction of the robot is right, since the right wheel needs to rotate backward and the left wheel needs to rotate forward, the displacement increment of the right wheel is a negative value and the displacement increment of the left wheel is a positive value. It can be learned that when the left wheel completely slips, the displacement increment of the left wheel is the smallest, and when the right wheel completely slips, the displacement increment of the right wheel is the largest. Therefore, in the case that both the left wheel and the right wheel completely slip, the maximum inclination angle change amount $\theta_{max}$ of the robot in the counterclockwise direction when the robot is not affected by the external force can be obtained. In this case, the minimum association value $L_{min}$ of the displacement increment of the left wheel is 0, and the maximum association value $R_{max}$ of the displacement increment of the right wheel is also 0. Therefore, $\theta_{max}$ = 0 can be determined based on the above formula 2.

Therefore, in an optional embodiment, in the case of the right turn, the inclination angle change range when the robot is not affected by the external force may be represented as $(\frac{R-L}{r}, 0)$. In another optional embodiment, an error range w may also be set, such that in the case of the right turn, the inclination angle change range of the above robot when the robot is not affected by the external force may be represented as $(\frac{R-L}{r} - w, +w)$.

After the inclination angle change range of the robot when the robot is not affected by the external force is determined, in an optional embodiment, the inclination angle change amount acquired in step S110 may be compared with the above inclination angle change range to determine whether the robot is forcibly displaced according to a numerical relationship between the inclination angle change amount and the above inclination angle change range.

In another optional embodiment, a current moving direction of the robot may also be acquired, and then an inclination angle change range of the robot when the robot is not affected by an external force in the moving direction is selected and compared with the inclination angle change range, so as to determine whether the robot is forcibly displaced according to a numerical relationship between the inclination angle change amount and the above inclination angle change range.

Specifically, when the moving direction of the robot is forward, whether the robot is forcibly displaced may be determined according to a numerical relationship between the inclination angle change amount and $\left(-\frac{L}{r}, \frac{R}{r}\right)$ or $\left(-\frac{L}{r} - w, \frac{R}{r} + w\right)$. Similarly, when the movement direction of the robot is backward, whether the robot is forcibly displaced may be determined according to a numerical relationship between the inclination angle change amount and $\left(\frac{R}{r}, -\frac{L}{r}\right)$ or $\left(\frac{R}{r} - w, -\frac{L}{r} + w\right)$; when the movement direction of the robot is left turn, whether the robot is forcibly displaced may be determined according to a numerical relationship between the inclination angle change amount and $\left(0, \frac{R-L}{r}\right)$ or $\left(-w, \frac{R-L}{r} + w\right)$; and when the movement direction of the robot is right turn, whether the robot is forcibly displaced may be determined according to a numerical relationship between the inclination angle change amount and $\left(\frac{R-L}{r}, 0\right)$ or $\left(\frac{R-L}{r} - w, w\right)$.

When the inclination angle change amount is within the above inclination angle change range, it may be determined that the robot is not forcibly displaced. In this case, the robot may be controlled to continue to perform the current work task without intervention.

When the inclination angle change amount is not within the above inclination angle change range, reference may still be made to FIG. 1. In step S130, it is determined that the robot is forcibly displaced when the inclination angle change amount is out of the inclination angle change range.

In this step, when the inclination angle change amount is out of the inclination angle change range, it may be determined that the robot is forcibly displaced.

When it is determined that the robot is forcibly displaced, the robot may be controlled to suspend a work task being performed, such as a sweeping task, a vacuuming task, etc., which may be set according to the actual situation, and is not particularly limited in the present disclosure. After the work task is suspended, whether the robot is forcibly displaced again may be detected within a following preset duration (for example, 1 minute, which may be set according to an actual situation, and is not particularly limited in the present disclosure). If the forced displacement event does not occur again, the robot may be controlled to relocate to update its own position information, otherwise, the robot may be controlled to maintain the working-suspended state.

The relocation is also referred to as global positioning, that is, the robot scans surrounding environment information while moving, and matches information acquired by scanning with a saved map, so as to update its own position information.

By controlling the robot to relocate after the forced displacement event is detected, a problem that a user interference event causes the robot to misjudge its own position information, and further interferes with the normal operation process of the robot can be solved, thereby eliminating the cognitive deviation of the robot to its own position, and improving the operation stability of the robot.

After updating its own position information through relocation, the robot may continue to perform the corresponding work task based on the updated position information, for example, perform a subsequent sweeping task.

If the relocation of the robot fails and the above position information cannot be updated, the above robot may be controlled to end the above work task and restart, and after restarting, the above work task may be performed again.

For example, it is assumed that the acquired inclination angle change amount is 11 degrees. In this case, the displacement increment L detected by the odometer A is 2, the displacement increment R detected by the odometer B is 2, and the distance r between the two driving wheels is 23.9 cm. Therefore, according to the above formula 1 and formula 2, it can be calculated that the inclination angle change range is (-0.083682 radians, 0.083682 radians), which can be converted into degrees from radians to obtain (-4.79 degrees, 4.79 degrees), and 11 degrees is out of the above inclination angle change range (-4.79 degrees, 4.79 degrees), such that it can be determined that the robot is forcibly displaced during the movement. In this case, the work task of the robot may be suspended, and then the robot may be controlled to relocate to update its position information. After the position information is updated, the robot may continue to perform the above work task.

Referring to FIG. 7, taking a sweeping robot as an example, FIG. 7 shows an overall flowchart of a method for robot displacement detection according to an embodiment of the present disclosure, including steps S701 to S706.

In step S701, a robot is in a sweeping state.

In step S702, it is determined whether a forced displacement event is detected. If no forced displacement event is detected, return to step S701.

If the forced displacement event is detected, the process proceeds to step S703, in which sweeping is suspended.

In step S704, it is determined whether the forced displacement event is detected again within a preset duration. If the forced displacement event is detected, the process returns to step S703.

If the forced displacement event is not detected, the process proceeds to step S705, in which relocation is performed.

In step S706, positioning is completed, sweeping continues, and the process skips to step S701.

Based on the above technical solutions, the present disclosure at least has the following technical effects:

First, an effective detection solution for a forced displacement event of a robot is provided, which makes up for a gap in the related art that the above forced displacement event cannot be identified.

Second, a size of parameters required to be collected in the present disclosure is small, such that the computational load in the detection process is small, the efficiency is high, and the data processing requirement in the robot field is met.

Third, the parameters involved in the present disclosure are all conventional parameters reflecting the movement process of the robot, and there is no need to deploy a new detection device. For example, the inclination angle change amount can be collected by a gyroscope, and the displacement increment can be collected by an odometer, such that accurate forced displacement detection can be achieved without increasing additional costs.

Fourth, by controlling the robot to relocate after the forced displacement event is detected, a problem that a user interference event causes the robot to misjudge its own position information, and further interferes with the normal operation process of the robot can be solved, thereby eliminating the cognitive deviation of the robot to its own position, and improving the operation stability of the robot.

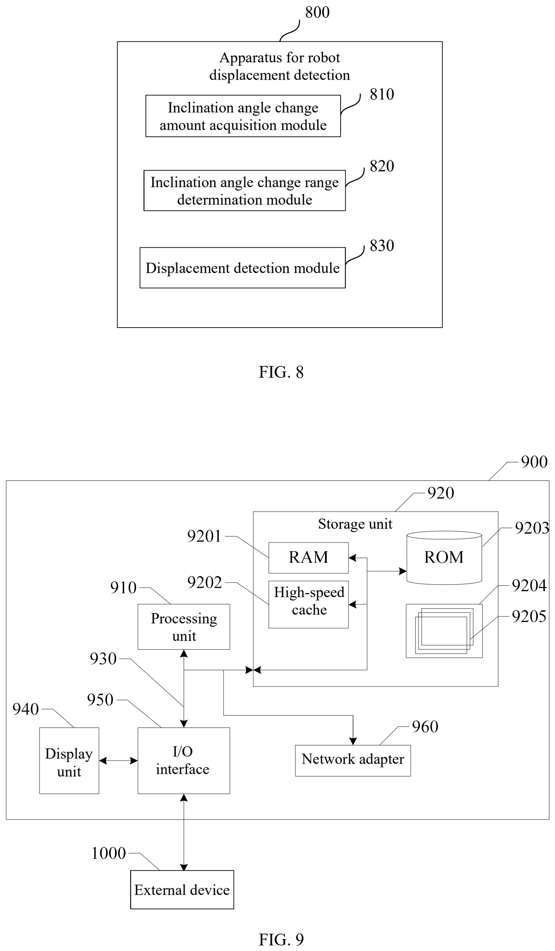

The present disclosure further provides an apparatus for robot displacement detection, and a robot at least includes two driving wheels. FIG. 8 shows a schematic structural diagram of an apparatus for robot displacement detection according to an exemplary embodiment of the present disclosure. As shown in FIG. 8, the apparatus for robot displacement detection 800 may include an inclination angle change amount acquisition module 810, an inclination angle change range determination module 820, and a displacement detection module 830, where

the inclination angle change amount acquisition module 810 is configured to acquire an inclination angle change amount of the robot during movement of the robot;

the inclination angle change range determination module 820 is configured to determine an inclination angle change range of the robot when the robot is not affected by an external force according to displacement increments of the two driving wheels and a distance between the two driving wheels; and

the displacement detection module 830 is configured to determine that the robot is forcibly displaced when the inclination angle change amount is out of the inclination angle change range.

In an exemplary embodiment of the present disclosure, the two driving wheels include a first driving wheel and a second driving wheel. When the first driving wheel or the second driving wheel rotates in a first direction, a displacement increment of the first driving wheel or the second driving wheel is a positive value; and when the first driving wheel or the second driving wheel rotates in a second direction, a displacement increment of the first driving wheel or the second driving wheel is a negative value, where the second direction is an opposite direction of the first direction.

In an exemplary embodiment of the present disclosure, when the first driving wheel rotates in the first direction and/or the second driving wheel rotates in the second direction, an inclination angle of the robot gradually decreases in a preset hour hand direction; and when the first driving wheel rotates in the second direction and/or the second driving wheel rotates in the first direction, an inclination angle of the robot gradually increases in a preset hour hand direction.

In an exemplary embodiment of the present disclosure, the inclination angle change range is limited by a minimum inclination angle change amount of the robot in the preset hour hand direction and a maximum inclination angle change amount of the robot in the preset hour hand direction.

In an embodiment of the present disclosure, determining, by the inclination angle change range determination module 820, the inclination angle change range of the robot when the robot is not affected by the external force according to the displacement increments of the two driving wheels and the distance between the two driving wheels includes: determining the minimum inclination angle change amount of the robot in the preset hour hand direction according to a maximum association value of the displacement increment of the first driving wheel, a minimum association value of the displacement increment of the second driving wheel, and the distance between the two driving wheels; and determining the maximum inclination angle change amount of the robot in the preset hour hand direction according to a minimum association value of the displacement increment of the first driving wheel, a maximum association value of the displacement increment of the second driving wheel, and the distance between the two driving wheels.

In an exemplary embodiment of the present disclosure, the maximum association value of the displacement increment of the first driving wheel is determined in the following manner: determining a preset value as the maximum association value if the displacement increment of the first driving wheel is a negative value; and determining the displacement increment of the first driving wheel as the maximum association value if the displacement increment of the first driving wheel is a positive value.

In an exemplary embodiment of the present disclosure, the minimum association value of the displacement increment of the second driving wheel is determined in the following manner: determining the displacement increment of the second driving wheel as the minimum association value if the displacement increment of the second driving wheel is a negative value; and determining a preset value as the minimum association value if the displacement increment of the second driving wheel is a positive value.

In an exemplary embodiment of the present disclosure, determining, by the inclination angle change range determination module 820, the minimum inclination angle change amount of the robot in the preset hour hand direction according to the maximum association value of the displacement increment of the first driving wheel, the minimum association value of the displacement increment of the second driving wheel, and the distance between the two driving wheels includes: acquiring a difference between the minimum association value of the displacement increment of the second driving wheel and the maximum association value of the displacement increment of the first driving wheel; and determining the minimum inclination angle change amount of the robot in the preset hour hand direction according to a ratio of the difference to the distance between the two driving wheels.

In an exemplary embodiment of the present disclosure, the minimum association value of the displacement increment of the first driving wheel is determined in the following manner: determining the displacement increment of the first driving wheel as the minimum association value if the displacement increment of the first driving wheel is a negative value; and determining a preset value as the minimum association value if the displacement increment of the first driving wheel is a positive value.

In an exemplary embodiment of the present disclosure, the maximum association value of the displacement increment of the second driving wheel is determined in the following manner: determining a preset value as the maximum association value if the displacement increment of the second driving wheel is a negative value; and determining the displacement increment of the second driving wheel as the maximum association value if the displacement increment of the second driving wheel is a positive value.

In an exemplary embodiment of the present disclosure, determining, by the inclination angle change range determination module 820, the maximum inclination angle change amount of the robot in the preset hour hand direction according to the minimum association value of the displacement increment of the first driving wheel, the maximum association value of the displacement increment of the second driving wheel, and the distance between the two driving wheels includes: acquiring a difference between the maximum association value of the displacement increment of the second driving wheel and the minimum association value of the displacement increment of the first driving wheel; and determining the maximum inclination angle change amount of the robot in the preset hour hand direction according to a ratio of the difference to the distance between the two driving wheels.

In an exemplary embodiment of the present disclosure, the preset value is 0.

In an exemplary embodiment of the present disclosure, after determining that the robot is forcibly displaced, the displacement detection module 830 is configured to:

control the robot to suspend a work task being performed; and in response to no forcible displacement of the robot being detected again within a preset duration, control the robot to relocate to update position information of the robot.

In an exemplary embodiment of the present disclosure, after controlling the robot to relocate to update the position information of the robot, the displacement detection module 830 is configured to:

control the robot to continue to perform the work task based on the updated position information.

In an exemplary embodiment of the present disclosure, acquiring, by the inclination angle change amount acquisition module 810, the inclination angle change amount of the robot includes: acquiring the inclination angle change amount of the robot in a combination of one or more of the following manners: acquiring the inclination angle change amount of the robot through an angle sensor disposed on the robot; acquiring the inclination angle change amount of the robot through LDS; and acquiring the inclination angle change amount of the robot through a movement monitoring image of the robot.

Specific details of each module in the above apparatus for robot displacement detection have been described in detail in the corresponding method for robot displacement detection, and thus will not be repeated here.

It should be noted that although several modules or units of the device for action execution are mentioned in the above detailed description, such division is not mandatory. Indeed, the features and functions of two or more modules or units described above may be embodied in one module or unit according to embodiments of the present disclosure. Conversely, the features and functions of one module or unit described above may be further divided to be embodied by a plurality of modules or units.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, one step may be decomposed into a plurality of steps for execution, and/or the like.

Based on the description of the foregoing embodiments, those skilled in the art can easily understand that the exemplary embodiments described herein may be implemented by software, or may be implemented by software in combination with necessary hardware. Therefore, the technical solutions according to the embodiments of the present disclosure may be implemented in a form of a software product. The software product may be stored in a non-volatile storage medium (which may be a CD-ROM, a USB flash drive, a removable hard disk, or the like) or on a network, and includes several instructions for instructing a computing device (which may be a personal computer, a server, a mobile terminal, a network device, or the like) to perform the methods according to the embodiments of the present disclosure.

The present disclosure further provides a computer-readable storage medium. The computer-readable storage medium may be included in the electronic device described in the foregoing embodiments, or may exist alone without being assembled into the electronic device.

The computer-readable storage medium includes, for example, but is not limited to, an electrical, magnetic, optical, electromagnetic, infrared, or semiconductor system, apparatus, or device, or any combination thereof. More specific examples of the computer-readable storage medium include but are not limited to: an electrical connection with one or more wires, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination thereof. In the present disclosure, the computer-readable storage medium is any tangible medium containing or storing a program for use by or in conjunction with an instruction execution system, apparatus, or device.

The computer-readable storage medium may send, propagate, or transmit a program used by or in combination with an instruction execution system, apparatus, or device. Program codes contained on the computer-readable storage medium are transmitted using any suitable medium, including but not limited to: wireless, wired, optical cables, RF, or any suitable combination thereof.

The computer-readable storage medium carries one or more programs, and the above one or more programs, when executed by the electronic device, cause the electronic device to implement the method described in the foregoing embodiments.

In addition, an embodiment of the present disclosure further provides an electronic device capable of implementing the above method.

Those skilled in the art can understand that various aspects of the present disclosure can be implemented as systems, methods, or program products. Therefore, various aspects of the present disclosure may be specifically implemented in the form of a complete hardware embodiment, a complete software embodiment (including firmware, microcode, etc.), or an embodiment combining hardware and software, which may be collectively referred to as a "circuit", "module" or "system" herein.

An electronic device 900 according to such an embodiment of the present disclosure is described below with reference to FIG. 9. The electronic device 900 shown in FIG. 9 is only an example, and should not bring any limitation to the functions and the use scope of the embodiments of the present disclosure.

As shown in FIG. 9, the electronic device 900 is present in a form of a general-purpose computing device. Components of the electronic device 900 may include, but are not limited to, at least one above processing unit 910, at least one above storage unit 920, a bus 930 connecting different system components (including the storage unit 920 and the processing unit 910), and a display unit 940.

The storage unit stores program codes, and the program codes may be executed by the processing unit 910, such that the processing unit 910 performs the steps according to various exemplary embodiments of the present disclosure described in the above "exemplary methods" section of the specification. For example, the processing unit 910 may perform the following steps as shown in FIG. 1: In step S110, an inclination angle change amount of a robot is acquired during movement of the robot; in step S120, an inclination angle change range of the robot when the robot is not affected by an external force is determined according to displacement increments of the two driving wheels and a distance between the two driving wheels; and in step S130, it is determined that the robot is forcibly displaced when the inclination angle change amount is out of the inclination angle change range.

The storage unit 920 may include a readable medium in a form of a volatile storage unit, for example, a random access memory (RAM) 9201 and/or a high-speed cache memory 9202, and may further include a read-only memory (ROM) 9203.

The storage unit 920 may further include a program/utility 9204 having a set (at least one) of program modules 9205, such program modules 9205 including, but not limited to: an operation system, one or more application programs, other program modules and program data, each of which or some combinations thereof may include an embodiment of a network environment.

The bus 930 may represent one or more of several types of bus structures, including a storage unit bus or a storage unit controller, a peripheral bus, a graphics acceleration port, a processing unit, or a local bus using any of a plurality of bus structures.

The electronic device 900 may also communicate with one or more external devices 1000 (such as a keyboard, a pointing device, a Bluetooth device, etc.), and may also communicate with one or more devices that enable a user to interact with the electronic device 900, and/or communicate with any device (such as a router, a modem, etc.) that enables the electronic device 900 to communicate with one or more other computing devices. Such communication may be implemented through an input/output (I/O) interface 950. In addition, the electronic device 900 may also communicate with one or more networks (such as a local area network (LAN), a wide area network (WAN), and/or a public network, such as the Internet) via a network adapter 960. As shown in the figure, the network adapter 960 communicates with other modules of the electronic device 900 via the bus 930. It should be understood that although not shown in the figures, other hardware and/or software modules may be used in conjunction with the electronic device 900, including, but not limited to: microcode, device drivers, redundant processing units, external disk drive arrays, RAID systems, tape drivers, data backup storage systems, and the like.

Other embodiments of the present disclosure are apparent to those skilled in the art from consideration of the specification and practice of the present disclosure disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered exemplary, and a true scope and spirit of the present disclosure are indicated in the claims.

## Claims

1. A method for robot displacement detection, wherein a robot at least comprises two driving wheels, and the method comprises:

    acquiring an inclination angle change amount of the robot during movement of the robot;
    determining an inclination angle change range of the robot when the robot is not affected by an external force according to displacement increments of the two driving wheels and a distance between the two driving wheels; and
determining that the robot is forcibly displaced when the inclination angle change amount is out of the inclination angle change range.

2. The method according to claim 1, wherein the two driving wheels comprise a first driving wheel and a second driving wheel, and the method further comprises:

    when the first driving wheel or the second driving wheel rotates in a first direction, a displacement increment of the first driving wheel or the second driving wheel is a positive value; and
    when the first driving wheel or the second driving wheel rotates in a second direction, a displacement increment of the first driving wheel or the second driving wheel is a negative value, wherein the second direction is an opposite direction of the first direction.

3. The method according to claim 2, further comprising:

    when the first driving wheel rotates in the first direction and/or the second driving wheel rotates in the second direction, an inclination angle of the robot gradually decreases in a preset hour hand direction; and
    when the first driving wheel rotates in the second direction and/or the second driving wheel rotates in the first direction, an inclination angle of the robot gradually increases in a preset hour hand direction.

4. The method according to claim 3, wherein the inclination angle change range is limited by a minimum inclination angle change amount of the robot in the preset hour hand direction and a maximum inclination angle change amount of the robot in the preset hour hand direction.

5. The method according to claim 4, wherein determining the inclination angle change range of the robot when the robot is not affected by the external force according to the displacement increments of the two driving wheels and the distance between the two driving wheels comprises:

    determining the minimum inclination angle change amount of the robot in the preset hour hand direction according to a maximum association value of the displacement increment of the first driving wheel, a minimum association value of the displacement increment of the second driving wheel, and the distance between the two driving wheels; and
    determining the maximum inclination angle change amount of the robot in the preset hour hand direction according to a minimum association value of the displacement increment of the first driving wheel, a maximum association value of the displacement increment of the second driving wheel, and the distance between the two driving wheels.

6. The method according to claim 5, wherein the maximum association value of the displacement increment of the first driving wheel is determined in the following manner:

    determining a preset value as the maximum association value if the displacement increment of the first driving wheel is a negative value; and determining the displacement increment of the first driving wheel as the maximum association value if the displacement increment of the first driving wheel is a positive value.

7. The method according to claim 5, wherein the minimum association value of the displacement increment of the second driving wheel is determined in the following manner:

    determining the displacement increment of the second driving wheel as the minimum association value if the displacement increment of the second driving wheel is a negative value; and determining a preset value as the minimum association value if the displacement increment of the second driving wheel is a positive value.

8. An apparatus for robot displacement detection, wherein a robot at least comprises two driving wheels, and the apparatus comprises:

    an inclination angle change amount acquisition module, configured to acquire an inclination angle change amount of the robot during movement of the robot; an inclination angle change range determination module, configured to determine an inclination angle change range of the robot when the robot is not affected by an external force according to displacement increments of the two driving wheels and a distance between the two driving wheels; and a displacement detection module, configured to determine that the robot is forcibly displaced when the inclination angle change amount is out of the inclination angle change range.

9. A computer storage medium having a computer program stored thereon, wherein the computer program, when executed by a processor, implements the method for robot displacement detection according to any one of claims 1 to 7.

10. An electronic device, comprising:

    a processor; and a memory, configured to store executable instructions of the processor, wherein the processor is configured to execute the executable instructions to perform the method for robot displacement detection according to any one of claims 1 to 7.

Acquire an inclination angle change amount of a robot during movement of the robot ⟋ S110

Determine an inclination angle change range of the robot when the robot is not affected by an external force according to displacement increments of two driving wheels and a distance between the two driving wheels ⟋ S120

Determine that the robot is forcibly displaced when the inclination angle change amount is out of the inclination angle change range ⟋ S130

FIG. 1

Determine a minimum inclination angle change amount of a robot in a preset hour hand direction according to a maximum association value of a displacement increment of a first driving wheel, a minimum association value of a displacement increment of a second driving wheel, and a distance between the two driving wheels ⟋ S201

Determine a maximum inclination angle change amount of the robot in the preset hour hand direction according to a minimum association value of the displacement increment of the first driving wheel, a maximum association value of the displacement increment of the second driving wheel, and the distance between the two driving wheels ⟋ S202

FIG. 2

Determine a preset value as a maximum association value if a displacement increment of a first driving wheel is a negative value ⟋ S301

Determine a displacement increment of a first driving wheel as a maximum association value if the displacement increment of the first driving wheel is a positive value ⟋ S302

FIG. 3

Determine a displacement increment of a second driving wheel as a minimum association value if the displacement increment of the second driving wheel is a negative value ⟋ S401

Determine a preset value as a minimum association value if a displacement increment of a second driving wheel is a positive value ⟋ S402

FIG. 4

Determine a displacement increment of a first driving wheel as a minimum association value if the displacement increment of the first driving wheel is a negative value ⟋ S501

Determine a preset value as a minimum association value if a displacement increment of a first driving wheel is a positive value ⟋ S502

FIG. 5

Determine a preset value as a maximum association value if a displacement increment of a second driving wheel is a negative value — S601

Determine a displacement increment of a second driving wheel as a maximum association value if the displacement increment of the second driving wheel is a positive value — S602

FIG. 6

S701

Sweeping state

NO

S702

Forced displacement event detection

YES

S703

Suspend

YES

S704

Forced displacement event detection

NO

S705

Relocate

S706

Positioning is completed, and sweeping continues

FIG. 7

FIG. 8

FIG. 9

## INTERNATIONAL SEARCH REPORT

| | International application No. |
| --- | --- |
| | **PCT/CN2023/138444** |

| A. | CLASSIFICATION OF SUBJECT MATTER |
| --- | --- |

A47L9/28(2006.01)i; B25J9/16(2006.01)n

According to International Patent Classification (IPC) or to both national classification and IPC

| B. | FIELDS SEARCHED |
| --- | --- |

Minimum documentation searched (classification system followed by classification symbols)

IPC: A47L B25J G05D

Documentation searched other than minimum documentation to the extent that such documents are included in the fields searched

Electronic data base consulted during the international search (name of data base and, where practicable, search terms used)

CNABS, CNTXT, CNKI: 机器人, 移位, 强制, 移动, 位置, 改变, 变化, 轮, 里程计, 角, 距离: VEN, USTXT, WOTXT, EPTXT: robot, movement, forcible, position, change, wheel, odometer, angle, distance

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 117006986 A (BEIJING ROBOROCK INNOVATION TECHNOLOGY CO., LTD.) 07 November 2023 (2023-11-07) <br> description, paragraphs 6-191, and figures 1-9 | 1-10 |
| A | US 2016334800 A1 (SAMSUNG ELECTRONICS CO., LTD.) 17 November 2016 (2016-11-17) <br> description, paragraphs 50-54 and 73-85 | 1-10 |
| A | US 2020306983 A1 (LG ELECTRONICS INC.) 01 October 2020 (2020-10-01) <br> entire document | 1-10 |
| A | CN 107443430 A (ZHUHAI AMICRO SEMICONDUCTOR CO., LTD.) 08 December 2017 (2017-12-08) <br> entire document | 1-10 |
| A | CN 110293563 A (SYRIUS TECHNOLOGY (SHENZHEN) CO., LTD.) 01 October 2019 (2019-10-01) <br> entire document | 1-10 |

☑ Further documents are listed in the continuation of Box C.    ☑ See patent family annex.

| | |
| --- | --- |
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **23 February 2024** | **28 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/138444** |

### C. DOCUMENTS CONSIDERED TO BE RELEVANT

| Category* | Citation of document, with indication, where appropriate, of the relevant passages | Relevant to claim No. |
| --- | --- | --- |
| A | CN 108748135 A (SHANGHAI VIEW TECHNOLOGIES CO., LTD.) 06 November 2018 (2018-11-06)<br>entire document | 1-10 |

Form PCT/ISA/210 (second sheet) (July 2022)

**INTERNATIONAL SEARCH REPORT**
Information on patent family members

International application No.

**PCT/CN2023/138444**

| Patent document cited in search report | | | Publication date (day/month/year) | Patent family member(s) | | | Publication date (day/month/year) |
|---|---|---|---|---|---|---|---|
| CN | 117006986 | A | 07 November 2023 | None | | | |
| US | 2016334800 | A1 | 17 November 2016 | US | 10383497 | B2 | 20 August 2019 |
| | | | | KR | 20160133348 | A | 22 November 2016 |
| | | | | KR | 102393921 | B1 | 04 May 2022 |
| | | | | WO | 2016182187 | A1 | 17 November 2016 |
| | | | | IN | 201727039898 | A | 08 December 2017 |
| | | | | CN | 107636548 | A | 26 January 2018 |
| | | | | EP | 3294101 | A1 | 21 March 2018 |
| | | | | EP | 3294101 | B1 | 17 June 2020 |
| | | | | CN | 107636548 | B | 13 August 2021 |
| | | | | IN | 454901 | B | 29 September 2023 |
| US | 2020306983 | A1 | 01 October 2020 | US | 11400600 | B2 | 02 August 2022 |
| | | | | JP | 2020161141 | A | 01 October 2020 |
| | | | | JP | 7150773 | B2 | 11 October 2022 |
| | | | | KR | 20200119394 | A | 20 October 2020 |
| | | | | KR | 102243179 | B1 | 21 April 2021 |
| | | | | AU | 2020247141 | A1 | 18 November 2021 |
| | | | | AU | 2020247141 | B2 | 11 May 2023 |
| | | | | EP | 3946841 | A1 | 09 February 2022 |
| | | | | WO | 2020197297 | A1 | 01 October 2020 |
| CN | 107443430 | A | 08 December 2017 | CN | 107443430 | B | 05 November 2019 |
| CN | 110293563 | A | 01 October 2019 | CN | 110293563 | B | 26 July 2022 |
| CN | 108748135 | A | 06 November 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310009468